# EUROPEAN PATENT APPLICATION

(11) **EP 4 831 040 A1**
(43) Date of publication of application: **28.10.2026**
(21) Application number: 26173817.3
(22) Date of filing: 21.04.2026
(51) Int. Cl.: B62D 25/08, B62D 29/00

(54) **VEHICLE REAR PORTION FRAMEWORK STRUCTURE**

(30) Priority: 24.04.2025 JP 2025072738
(71) Applicant: Toyota Jidosha Kabushiki Kaisha, Toyota-shi, Aichi-ken 471-8571 (JP)
(72) Inventor: ITO, Takehiro, TOYOTA-SHI, AICHI-KEN, 471-8571 (JP); NURUKI, Tetsuo, TOYOTA-SHI, AICHI-KEN, 471-8571 (JP); MURASHIGE, Norihiro, TOYOTA-SHI, AICHI-KEN, 471-8571 (JP)
(74) Representative: Cabinet Beau de Loménie

(57) **Abstract**

A vehicle rear portion framework structure (10) includes a left and right pair of wheel house portions (12), a floor portion (14) and ribs (30, 50). The floor portion (14) is provided between the left and right pair of wheel house portions (12) and an aperture portion (20) is formed in the floor portion (14). The ribs (30, 50) project from vehicle width direction inner sides of the wheel house portions (12). Each rib (30, 50) extends from the floor portion (14) to an upper end portion of the wheel house portion (12). A base portion of the rib (30, 50) is in contact with the floor portion (14). A vehicle width direction inner side end portion of the base portion extends to a position that is closer to an aperture edge of the aperture portion (20) than to the wheel house portion (12) in plan view.

## Description

### BACKGROUND

### Technical Field

The present disclosure relates to a vehicle rear portion framework structure.

### Related Art

Japanese Patent Application Laid-Open (JP-A) No. 2024-117583 discloses a vehicle rear portion framework structure that includes a left and right pair of wheel houses and is integrally molded by casting.

### SUMMARY

In a vehicle rear portion framework structure that includes a left and right pair of wheel houses and is integrally molded by casting as described above, a floor portion in which an aperture portion is formed may be provided between the left and right pair of wheel houses.

In this vehicle rear portion framework structure, molding characteristics may be improved due to the integral molding by casting, but there is still scope for improvement in regard to improving stiffness of the wheel houses and aperture portion vicinity structures.

The present disclosure is made in consideration of the circumstances described above, and an object of the present disclosure is to provide a vehicle rear portion framework structure that may raise stiffness.

A vehicle rear portion framework structure according to a first aspect includes: a left and right pair of wheel house portions; a floor portion provided between the left and right pair of wheel house portions, an aperture portion being formed in the floor portion; and a rib that projects from a vehicle width direction inner side of each of the wheel house portions, the rib extending from the floor portion to an upper end portion of the wheel house portions, a base portion of the rib being in contact with the floor portion, and a vehicle width direction inner side end portion of the base portion extending to a position that is closer to an aperture edge of the aperture portion than to the wheel house portions in plan view.

In the vehicle rear portion framework structure according to the first aspect, the ribs are provided that each project from the vehicle width direction inner side of the wheel house portion and extend from the floor portion to the upper end portion of the wheel house portion. In plan view, the vehicle width direction inner side end portion of the base portion of the rib, which is in contact with the floor portion, extends to a position that is closer to the aperture edge of the aperture portion than to the wheel house portion. Therefore, the rib may provide reinforcement to the upper end portion of the wheel house portion from the floor portion that is closer to the aperture edge of the aperture portion than to the wheel house portion. Thus, stiffness of the vehicle rear portion framework structure may be raised.

In a vehicle rear portion framework structure according to a second aspect, in the vehicle rear portion framework structure according to the first aspect, the vehicle width direction inner side end portion of the base portion of the rib extends to the aperture edge in plan view.

In the vehicle rear portion framework structure according to the second aspect, because the vehicle width direction inner side end portion of the base portion of the rib extends to the aperture edge of the aperture portion in plan view, the rib may serve as a transmission path for a load that pushes up from the vehicle lower side during running on a bad road surface. In addition, stiffness of an aperture vicinity portion in which the aperture portion is formed may be raised.

In a vehicle rear portion framework structure according to a third aspect, in the vehicle rear portion framework structure according to the first aspect or the second aspect, the aperture portion is formed by the casting.

In the vehicle rear portion framework structure according to the third aspect, because the aperture portion is formed by casting, a charging port for charging molten metal may be provided at a position to correspond with some region inside the aperture portion. When, for example, a charging port is specified in an aperture portion, upper portions of wheel house portions that are far from the charging port are susceptible to deformation at a time of ejection during casting. In the vehicle rear portion framework structure according to the third aspect, the ribs are provided that project from the vehicle width direction inner side of the wheel house portion and extend from the floor portion to the upper end portion of the wheel house portion, and each of whose vehicle width direction inner side end portion of the base portion that is in contact with the floor portion extends in plan view to a position that is closer to the aperture edge of the aperture portion than to the wheel house portion. Therefore, because the upper portions of the wheel house portions may be reinforced by the ribs, deformation of the upper portions of the wheel house portions at the time of ejection during casting may be suppressed.

In a vehicle rear portion framework structure according to a fourth aspect, in the vehicle rear portion framework structure according to any one of the first to third aspects, the rib extends from a substantially central portion in a vehicle front-and-rear direction of the aperture portion in plan view.

In the vehicle rear portion framework structure according to the fourth aspect, because the rib extends from a substantially central portion in the vehicle front-and-rear direction of the aperture portion in plan view, when, for example, a charging port is specified substantially at the center of the aperture portion, molten metal may be guided from the charging port without impediment and metal flow may be improved.

In a vehicle rear portion framework structure according to a fifth aspect, in the vehicle rear portion framework structure according to any one of the first to fourth aspects, each of the left and right pair of wheel house portions is provided with a strainer portion at an upper portion of the wheel house portion, and an upper end portion of the rib extends to the strainer portion.

In the vehicle rear portion framework structure according to the fifth aspect, the strainer portion is provided at the upper portion of each of the left and right pair of wheel house portions, and the upper end portion of each rib reaches the strainer portion. Therefore, the wheel house portion may be reinforced by the rib from the floor portion that is disposed between the aperture portion and the wheel house portion in plan view to the upper end portion of the wheel house portion including the strainer portion. Thus, stiffness of the vehicle rear portion framework structure may be raised.

In a vehicle rear portion framework structure according to a sixth aspect, in the vehicle rear portion framework structure according to any one of the first to fifth aspects, a plurality of the ribs are provided.

In the vehicle rear portion framework structure according to the sixth aspect, because the ribs are plurally provided, stiffness of the vehicle rear portion framework structure may be raised further.

In a vehicle rear portion framework structure according to a seventh aspect, in the vehicle rear portion framework structure according to any one of the first to sixth aspects, a projection amount of the rib toward the vehicle width direction inner side increases toward the floor portion.

In the vehicle rear portion framework structure according to the seventh aspect, because the rib is formed such that the projection amount to the vehicle width direction inner side thereof increases toward the floor portion, stiffness of the aperture vicinity portion in which the aperture portion is formed may be raised.

### ADVANTAGEOUS EFFECTS OF INVENTION

As described above, according to the vehicle rear portion framework structure according to the present disclosure, stiffness may be raised.

### BRIEF DESCRIPTION OF THE DRAWINGS

Exemplary embodiments of the present disclosure will be described in detail based on the following figures, wherein:
Fig. 1 is a perspective view schematically showing a vehicle rear portion framework structure according to a first exemplary embodiment.
Fig. 2 is a vertical sectional diagram schematically showing positional relationships of a rib.
Fig. 3 is a plan view schematically showing positional relationships of the rib.
Fig. 4 is a perspective view schematically showing principal portions of the rib according to the first exemplary embodiment and a variant example of the rib.
Fig. 5 is a plan view schematically showing positional relationships of the rib according to the variant example in Fig. 4.
Fig. 6 is a perspective view schematically showing a vehicle rear portion framework structure according to a second exemplary embodiment.

### DETAILED DESCRIPTION

### = First Exemplary Embodiment =

A vehicle in which a vehicle rear portion framework structure 10 according to a first exemplary embodiment of the present disclosure is employed is described below with reference to the drawings. In the present specification and drawings, structural elements with substantially the same functional structures are assigned the same reference symbols, and duplicative descriptions thereof are omitted accordingly. The arrow FR that is shown where appropriate in the drawings indicates a front side in a vehicle front-and-rear direction and the arrow UP indicates an upper side in the vehicle vertical direction. The arrow LH indicates a vehicle width direction left side and the arrow RH indicates the vehicle width direction right side, which are vehicle width direction outer sides in the present exemplary embodiment. Where descriptions are given below simply using the directions front, rear, upper, lower, left, right, inner side and outer side, unless otherwise specified, these represent front and rear in the vehicle front-and-rear direction, upper and lower in the vehicle vertical direction, left and right in the vehicle left-and-right direction (vehicle width direction), and an inner side and outer side in the vehicle width direction.

Unless particularly specified in this Description, each element is not limited to being a single element but may be plurally provided. In the drawings, the same reference symbol is assigned to elements that are substantially the same, and duplicative descriptions are omitted from the Description.

The vehicle in which the vehicle rear portion framework structure 10 according to the first exemplary embodiment is employed is, for example, an electric car or fuel cell car that includes a power unit including a motor and an engine or the like as a drive source and that runs on power generated by the power unit.

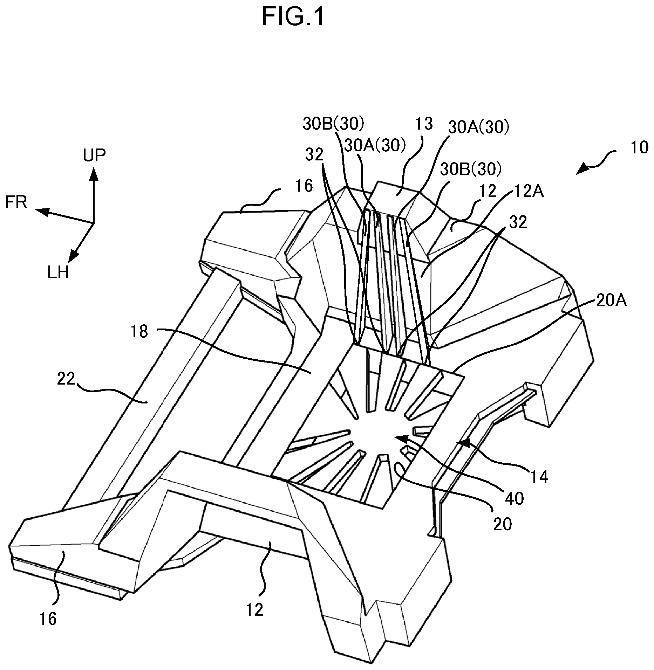

Fig. 1 is a perspective view schematically showing the vehicle rear portion framework structure 10 according to the first exemplary embodiment. The vehicle rear portion framework structure 10 serves as a framework portion of the vehicle shown in Fig. 1, and is provided at a rear portion of the vehicle. The vehicle rear portion framework structure 10 is integrally molded by casting.

As shown in Fig. 1, the vehicle rear portion framework structure 10 includes a left and right pair of wheel house portions 12, a floor portion 14 and rear side member portions 16. The floor portion 14 serves as a floor portion of the vehicle rear portion that is provided between the left and right pair of wheel house portions 12. The rear side member portions 16 extend to the vehicle rear side from the floor portion 14.

The left and right pair of wheel house portions 12 are each provided with a strainer portion 13 (also known as a brace) at an upper portion thereof. The strainer portion 13 extends, for example, in the vehicle vertical direction along a vehicle width direction inner side face 12A of the wheel house portion 12. The strainer portion 13 is formed in an open chamber shape (a shape with a hat-shaped cross-section) of which the vehicle width direction outer side is open. The strainer portion 13 at the vehicle left side is not shown in Fig. 1, but in practice is provided in the same manner as the strainer portion 13 at the vehicle right side.

The floor portion 14 is provided with a floor base 18 that extends in the vehicle front-and-rear direction and the vehicle width direction. The wheel house portions 12 are disposed at end portions at both the left and right sides of the floor base 18. An aperture portion 20 with a substantially rectangular shape is provided at a substantially central portion in the vehicle front-and-rear direction and vehicle width direction of the floor base 18. The aperture portion 20 penetrates through the floor base 18 in the vertical direction. The aperture portion 20 is molded by casting. That is, the aperture portion 20 is not an aperture that is provided by the vehicle rear portion framework structure 10 being integrally molded in a state lacking the aperture portion 20 and then the floor base 18 of the vehicle rear portion framework structure 10 being machined to provide the aperture portion 20.

The rear side member portions 16 are provided as a left and right pair, each of which extends in the front-and-rear direction from a front end to a rear end of the vehicle rear portion framework structure 10. Front end portions of the rear side member portions 16 are connected by a connection portion 22 that extends in the vehicle width direction. Thus, a front portion of the vehicle rear portion framework structure 10 is formed substantially in a frame shape of the floor base 18, the rear side member portions 16 and the connection portion 22. A bumper reinforcement, which is not shown in the drawings, is attached to rear end portions of the rear side member portions 16.

The vehicle rear portion framework structure 10 is provided with plural ribs 30 at the vehicle width direction inner side of each wheel house portion 12. Each rib 30 projects from that inner side, and extends from the floor base 18 of the floor portion 14 to an upper end portion of the wheel house portion 12. In the present exemplary embodiment, the wheel house portion 12 is provided with the strainer portion 13 at an upper portion thereof, and an upper end portion of the rib 30 reaches the strainer portion 13. That is, the rib 30 extends from the floor base 18 to an upper portion of the strainer portion 13. As an example in the present exemplary embodiment, four of the ribs 30 are provided.

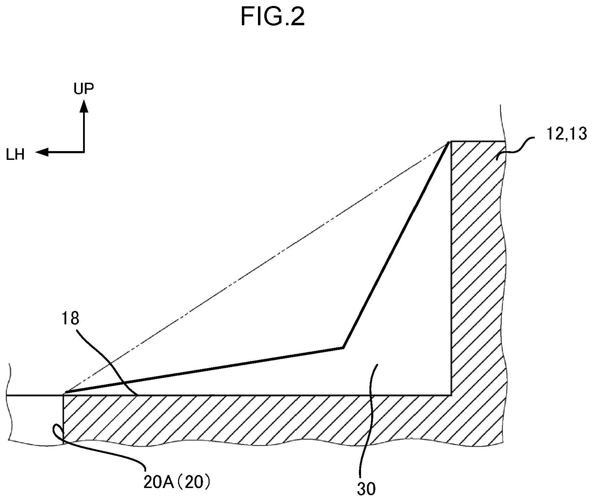

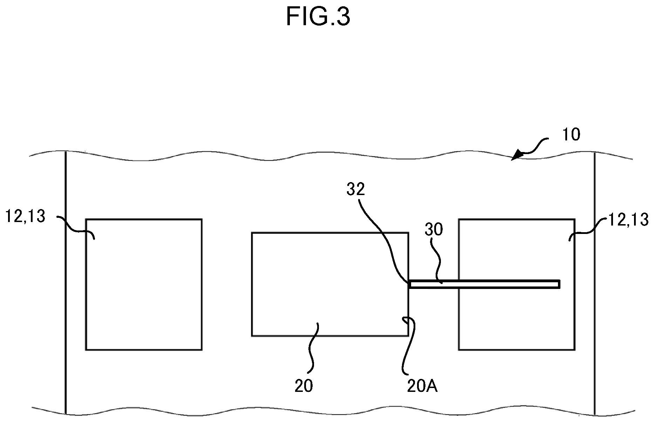

Fig. 2 is a vertical sectional diagram schematically showing positional relationships of the rib 30, and Fig. 3 is a plan view schematically showing positional relationships of the rib 30. As shown in Fig. 2 as an example seen in the vehicle front-and-rear direction, the rib 30 extends from the floor base 18 of the floor portion 14 to the upper end portion of the wheel house portion 12. The rib 30 may have a shape in which an upper edge of the rib 30 is disposed on the straight line depicted by the two-dot chain line, and may have a shape in which the upper edge of the rib 30 is inflected with a view to providing for space. The upper edge of the rib 30 may alternatively have a curved shape.

As shown in Fig. 3 as an example in plan view, a vehicle width direction inner side end portion 32 of a base portion of the rib 30, which is in contact with the floor base 18, extends to an aperture edge 20A at the side of the aperture portion 20 that is closer to the wheel house portion 12 or the strainer portion 13.

In the present exemplary embodiment, as shown by the example in Fig. 1, first ribs 30A are the two of the four ribs 30 that are at the inner side in the vehicle front-and-rear direction. In plan view, the first ribs 30A extend from a substantially central portion in the vehicle front-and-rear direction of the aperture portion 20. More specifically, as shown in Fig. 1, each first rib 30A extends substantially perpendicularly from the floor base 18 as seen in the vehicle width direction. As shown in Fig. 3, in plan view the first rib 30A is provided on a straight line that extends from the substantially central portion in the vehicle front-and-rear direction of the aperture portion 20 to the upper end portion of the strainer portion 13 that is at the upper portion of the wheel house portion 12.

Second ribs 30B are the two of the four ribs 30 that are at the outer sides in the vehicle front-and-rear direction. The second ribs 30B extend from outer sides in the vehicle front-and-rear direction relative to the central portion of the aperture portion 20. More specifically, as shown in Fig. 1, the second rib 30B at the vehicle front side extends diagonally toward the rear side from the floor base 18 as seen in the vehicle width direction, and the second rib 30B at the vehicle rear side extends diagonally toward the front side from the floor base 18.

As shown by the example in Fig. 1, the ribs 30 are formed such that projection amounts thereof to the vehicle width direction inner side increase towards the floor base 18. That is, viewed in the vehicle front-and-rear direction, the ribs 30 are formed such that widths of the ribs 30 in the vehicle width direction are greater at the lower side than at the upper side.

Although not shown in the drawing of Fig. 1, similarly to the right side, four of the ribs 30 are also provided at the wheel house portion 12 and strainer portion 13 at the vehicle width direction left side.

The vehicle rear portion framework structure 10 structured as described above is integrally molded by casting to include the left and right pair of wheel house portions 12, the strainer portions 13, the floor portion 14 (the floor base 18 and aperture portion 20), the rear side member portions 16, the connection portion 22 and the ribs 30. In the present exemplary embodiment, in order to improve metal flow, a charging port 40 for molten metal is provided at, for example, a position at which the aperture portion 20 is to be formed. A channel extends from the charging port 40 to a finished product portion. In a step after ejection from the mold, the channel is removed to provide the finished product. In steps thereafter, holes are subsequently machined to provide threaded holes at required locations.

### - Operation and Effects -

Now, operation and effects of the first exemplary embodiment are described.

In the vehicle rear portion framework structure 10 according to the first exemplary embodiment, the ribs 30 are provided, each of which projects from the vehicle width direction inner side of the wheel house portion 12, extends from the floor portion 14, which is to say the floor base 18, to the upper end portion of the strainer portion 13, and whose vehicle width direction inner side end portion 32 of the base portion that is in contact with the floor portion extends to the aperture edge 20A of the aperture portion 20. Therefore, the rib 30 may provide reinforcement from the floor base 18, at the position that is closer to the aperture edge 20A of the aperture portion 20 than to the wheel house portion 12 in plan view, to the upper end portion of the strainer portion 13. Thus, stiffness of the vehicle rear portion framework structure 10 may be raised by the ribs 30.

In the vehicle rear portion framework structure 10 according to the first exemplary embodiment, each rib 30 is provided at the vehicle width direction inner side of the wheel house portion 12 to link a highest portion of the wheel house portion 12 (in the first exemplary embodiment, the upper portion of the strainer portion 13) with the aperture edge 20A of the aperture portion 20, which is a lowest position. Therefore, when a load is applied from sideward to the vehicle equipped with the vehicle rear portion framework structure 10, stiffness is provided by compression stress of the ribs 30 in response to the load from sideward. Therefore, tilting of the wheel house portion 12 and strainer portion 13 may be prevented.
because the vehicle width direction inner side end portion 32 of the base portion of each rib 30 extends to the aperture edge 20A of the aperture portion 20 in plan view, the rib 30 may serve as a transmission path for a load that pushes up from the vehicle lower side during running on a bad road surface. In addition, stiffness of an aperture vicinity portion in which the aperture portion 20 is formed may be raised.

In the vehicle rear portion framework structure 10 according to the first exemplary embodiment, a section modulus of the upper portion of each wheel house portion 12, including the strainer portion 13, may be raised by the ribs 30. Therefore, deformation of the upper portion of the wheel house portion 12 including the strainer portion 13 at a time of ejection during casting may be suppressed.

In the vehicle rear portion framework structure 10 according to the first exemplary embodiment, as an example, the charging port 40 for molten metal is provided at a position at which the aperture portion 20 is to be formed. In consequence, because the ribs 30 extend in directions from the charging port 40 towards the upper portions of the strainer portions 13, molten metal is guided to the upper portions of the strainer portions 13 by the ribs 30. Thus, metal flow to the upper portions may be improved, deterioration of material charging characteristics may be suppressed, and casting characteristics may be improved.

In the vehicle rear portion framework structure 10 according to the first exemplary embodiment, as an example, each rib 30 is formed on a straight line from the charging port 40 to the upper portion of the strainer portion 13. Thus, the ribs 30 may guide the molten metal without impediment.

In the vehicle rear portion framework structure 10 according to the first exemplary embodiment, because the ribs 30 extend to the upper portions of the strainer portions 13, the ribs 30 extend to positions that are far from the charging port 40, and the molten metal can be guided to the upper portions of the strainer portions 13 by the ribs 30. Thus, metal flow to the upper portions of the strainer portions 13 may be improved, deterioration of material charging characteristics may be suppressed, and casting characteristics may be improved.

In the vehicle rear portion framework structure 10 according to the first exemplary embodiment, because the aperture portion 20 is molded by casting, the charging port through which the molten metal is charged may be provided at a position corresponding with some region inside the aperture portion 20. When, for example, the charging port 40 is specified in the aperture portion 20, the upper portions of the strainer portions 13 that are far from the charging port 40 are susceptible to deformation at a time of ejection during casting. In the vehicle rear portion framework structure 10 according to the first exemplary embodiment, because the upper portions of the strainer portions may be reinforced by the ribs 30, deformation of the upper portions of the strainer portions 13 at the time of ejection during casting may be suppressed.

Of the four ribs 30 in the vehicle rear portion framework structure 10 according to the first exemplary embodiment, the two first ribs 30A at the vehicle front-and-rear direction inner side extend from a substantially central portion in the vehicle front-and-rear direction of the aperture portion 20 in plan view. Therefore when the charging port 40 is specified at, for example, the substantial center of the aperture portion 20, the molten metal may be guided through the charging port 40 without impediment and the metal flow may be improved.

In the vehicle rear portion framework structure 10 according to the first exemplary embodiment, the left and right pair of wheel house portions 12 are provided with the strainer portions 13 at the respective upper portions, and the upper end portions of the ribs 30 reach to the strainer portions 13. Therefore, each wheel house portion 12 may be reinforced by the ribs 30 from the floor portion 14 that is disposed between the aperture portion 20 and the wheel house portion 12 in plan view to the upper end portion of the wheel house portion 12 that includes the strainer portion 13. Thus, stiffness of the vehicle rear portion framework structure 10 may be raised.

In the vehicle rear portion framework structure 10 according to the first exemplary embodiment, because the ribs 30 are plurally provided, stiffness of the vehicle rear portion framework structure 10 may be raised further.

In the vehicle rear portion framework structure 10 according to the first exemplary embodiment, because each rib 30 is formed such that the projection amount to the vehicle width direction inner side thereof increases toward the floor base 18, stiffness of the aperture vicinity portion in which the aperture portion 20 is formed may be raised.

### = Variant Example =

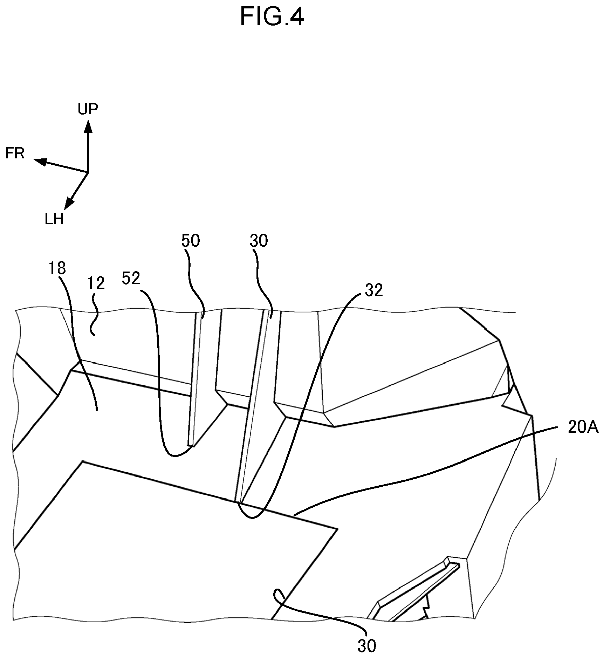

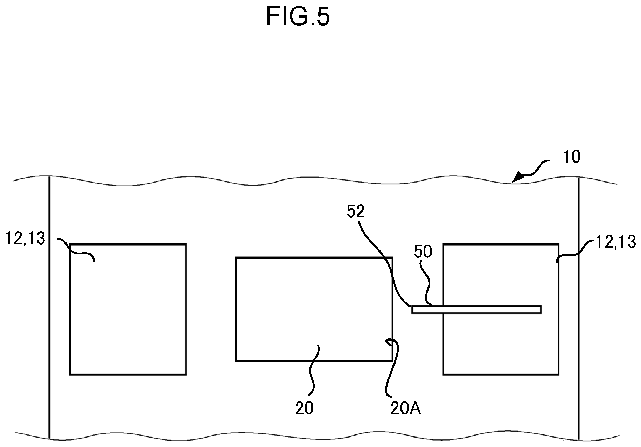

In the vehicle rear portion framework structure 10 according to the first exemplary embodiment described above, as shown in Fig. 3, the vehicle width direction inner side end portion 32 of the base portion of each rib 30 extends to the aperture edge 20A of the aperture portion 20 in plan view, but the present disclosure is not limited thus. Below, a rib 50 that is a variant example of the rib 30 is described. Fig. 4 is a perspective view schematically showing principal portions of the rib 30 according to the first exemplary embodiment and the rib 50 that is the variant example of the rib 30. Fig. 5 is a plan view schematically showing positional relationships of the rib 50 in Fig. 4.

As shown in Fig. 4, the vehicle width direction inner side end portion 32 of the base portion of the rib 30 extends to the aperture edge 20A of the aperture portion 20 in plan view. In contrast, a vehicle width direction inner side end portion 52 of a base portion of the rib 50 that is the variant example of the rib 30 extends to between the aperture portion 20 and the wheel house portion 12 in plan view. That is, as shown in Fig. 5, the vehicle width direction inner side end portion 52 of the base portion of the rib 50 is disposed between the aperture portion 20 and the wheel house portion 12. In the present exemplary embodiment, the vehicle width direction inner side end portion 52 of the base portion of the rib 50 extends to a position that is closer to the aperture portion 20 than to the wheel house portion 12. That is, the vehicle width direction inner side end portion 52 of the base portion of the rib 50 is disposed closer to the aperture edge 20A than a halfway point between the wheel house portion 12 and the aperture edge 20A. Other shapes of the rib 50 are similar to the rib 30.

Even when the vehicle width direction inner side end portion 52 of the base portion of the rib 50 extends to a position that is closer to the aperture edge 20A of the aperture portion 20 than to the wheel house portion 12 in plan view, as in the variant example described above, the rib 50 may provide reinforcement to the upper end portion of the strainer portion 13 from the floor base 18 that is closer to the aperture edge 20A of the aperture portion 20 than to the wheel house portion 12 in plan view. Thus, stiffness of the vehicle rear portion framework structure 10 may be raised. The rib 50 according to the variant example may provide the same effects as the rib 30 according to the first exemplary embodiment described above except in that the cross-sectional area of a transmission path for a load that pushes up from the vehicle lower side during running on a bad road surface is smaller than in the rib 30, and in that stiffness of the aperture vicinity portion in which the aperture portion 20 is formed is lower than with the ribs 30.

### = Second Exemplary Embodiment =

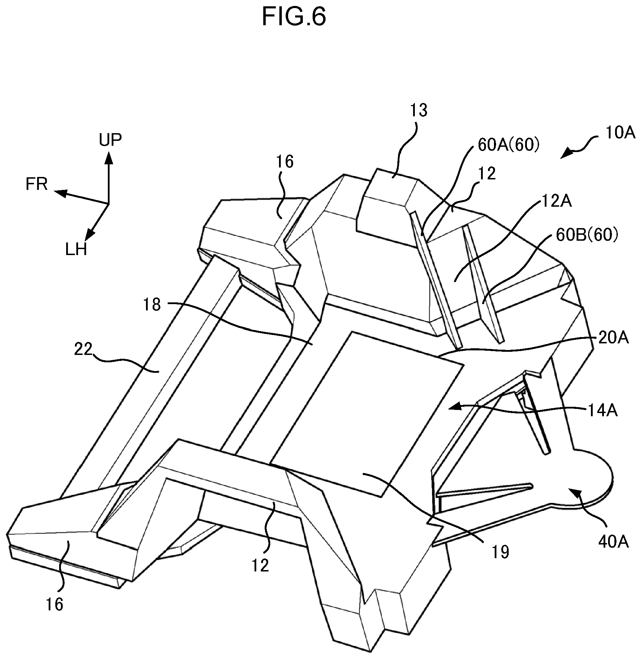

Now, a vehicle rear portion framework structure 10A according to a second exemplary embodiment of the present disclosure is described. In the second exemplary embodiment, structures that are the same as in the vehicle rear portion framework structure 10 according to the first exemplary embodiment described above are assigned the same reference symbols and detailed descriptions thereof are not given. Only structures that are different are described in detail. Fig. 6 is a perspective view schematically showing the vehicle rear portion framework structure 10A according to the second exemplary embodiment.

As shown in Fig. 6, a floor portion 14A of the vehicle rear portion framework structure 10A according to the second exemplary embodiment differs from the floor portion 14 of the vehicle rear portion framework structure 10 according to the first exemplary embodiment in that the aperture portion 20 is not provided. That is, the floor portion 14A of the vehicle rear portion framework structure 10A according to the second exemplary embodiment is provided with a floor pan 19 that forms a floor surface of a vehicle cabin at positions corresponding with the aperture portion 20.

The vehicle rear portion framework structure 10A according to the second exemplary embodiment is provided with plural ribs 60 at the vehicle width direction inner side of each wheel house portion 12. The ribs 60 project from the inner side of the wheel house portion 12 and extend from the floor base 18 of the floor portion 14A to the upper end portion of the wheel house portion 12. In the present exemplary embodiment, as an example, two of the ribs 60 are provided.

Of the two ribs 60, an upper end portion of a third rib 60A that is at the vehicle front side reaches the strainer portion 13. That is, the third rib 60A extends from the floor base 18 to the upper portion of the strainer portion 13. Meanwhile, at a fourth rib 60B of the two ribs 60 that is at the vehicle rear side, the strainer portion 13 is not provided at the upper side along the vehicle width direction inner side face 12A of the wheel house portion 12. Thus, the fourth rib 60B extends from the floor base 18 to an upper portion of the wheel house portion 12.

As shown in the example in Fig. 6, each rib 60 extends toward the vehicle rear side relative to the floor pan 19. That is, when seen in the vehicle width direction, the rib 60 extends diagonally toward the front side from the floor base 18. In other words, the rib 60 is provided so as to be disposed to the vehicle rear side toward the vehicle lower side.

As shown in the example in Fig. 6, each rib 60 is formed such that a projection amount to the vehicle width direction inner side thereof increases toward the floor base 18. That is, viewed in the vehicle front-and-rear direction, the width of the rib 60 in the vehicle width direction is greater at the lower side than at the upper side.

Although not shown in the drawing of Fig. 6, similarly to the right side, two of the ribs 60 are also provided at the wheel house portion 12 and strainer portion 13 at the vehicle width direction left side.

The vehicle rear portion framework structure 10A that is structured as described above includes the left and right pair of wheel house portions 12, the strainer portions 13, the floor portion 14A (the floor base 18 and the floor pan 19), the rear side member portions 16, the connection portion 22 and the ribs 60, and the vehicle rear portion framework structure 10A is integrally molded by casting. In the present exemplary embodiment, in order to improve metal flow, a charging port 40A for molten metal is provided, for example, at the vehicle rear side relative to the floor pan 19.

### - Operation and Effects -

Now, operation and effects of the second exemplary embodiment are described.

The vehicle rear portion framework structure 10A according to the second exemplary embodiment is provided with the ribs 60 that each project from the vehicle width direction inner side of the wheel house portion 12 and extend from the floor portion 14, which is to say the floor base 18, to the upper end portion of the wheel house portion 12 or strainer portion 13. Therefore, the ribs 60 may provide reinforcement from the floor base 18 to the upper end portion of the strainer portion 13. Thus, stiffness of the vehicle rear portion framework structure 10A may be raised.

In the vehicle rear portion framework structure 10A according to the second exemplary embodiment, each rib 60 is provided at the vehicle width direction inner side of the wheel house portion 12 to link a highest portion of the wheel house portion 12 (in the second exemplary embodiment, the upper portion of the wheel house portion 12 or the upper portion of the strainer portion 13) with the floor base 18, which is a lowest position. Therefore, when a load is applied from sideward to the vehicle equipped with the vehicle rear portion framework structure 10A, stiffness is provided by compression stress of the ribs 60 in response to the load from sideward. Therefore, tilting of the wheel house portion 12 and strainer portion 13 may be prevented.

In the vehicle rear portion framework structure 10A according to the second exemplary embodiment, the section modulus of the upper portion of each wheel house portion 12, including the strainer portion 13, may be raised by the ribs 60. Therefore, deformation of the upper portion of the wheel house portion 12 including the strainer portion 13 at a time of ejection during casting may be suppressed.

In the vehicle rear portion framework structure 10A according to the second exemplary embodiment, as an example, the charging port 40A for molten metal is provided at the vehicle rear side relative to the floor pan 19. Therefore, because the ribs 60 extend in directions from the charging port 40A towards the upper portions of the wheel house portions 12 and strainer portions 13, the molten metal is guided to the upper portions by the ribs 60. Thus, metal flow to the upper portions may be improved, deterioration of material charging characteristics may be suppressed, and casting characteristics may be improved.

In the vehicle rear portion framework structure 10A according to the second exemplary embodiment, as an example, each rib 60 is formed on a straight line from the charging port 40A to the upper portion of the wheel house portion 12 or strainer portion 13. Thus, the ribs 60 may guide the molten metal without impediment.

In the vehicle rear portion framework structure 10A according to the second exemplary embodiment, because the ribs 60 extend to the upper portions of the wheel house portions 12 and strainer portions 13, the ribs 60 extend to positions that are far from the charging port 40A, and the molten metal can be guided to the upper portions of the wheel house portions 12 and strainer portions 13 by the ribs 60. Thus, metal flow at the upper portions of the wheel house portions 12 and strainer portions 13 may be improved, deterioration of material charging characteristics may be suppressed, and casting characteristics may be improved.

In the vehicle rear portion framework structure 10A according to the second exemplary embodiment, the ribs 60 extend from the upper portions of the wheel house portions 12 and strainer portions 13 towards the vehicle rear side of the floor pan 19 in plan view. Therefore, when the charging port 40A is specified at, for example, the vehicle rear side relative to the floor pan 19, the molten metal may be guided through the charging port 40A without impediment and the metal flow may be improved.

In the vehicle rear portion framework structure 10A according to the second exemplary embodiment, the left and right pair of wheel house portions 12 are provided with the strainer portions 13 at the respective upper portions thereof, and the upper end portion of each third rib 60A reaches to the strainer portion 13. Therefore, the third rib 60A may provide reinforcement from the floor portion 14 to the upper end portion of the wheel house portion 12 including the strainer portion 13. Thus, stiffness of the vehicle rear portion framework structure 10A may be raised.

In the vehicle rear portion framework structure 10A according to the second exemplary embodiment, because the ribs 60 are plurally provided, stiffness of the vehicle rear portion framework structure 10A may be raised further.

In the vehicle rear portion framework structure 10A according to the second exemplary embodiment, because each rib 60 is formed such that the projection amount to the vehicle width direction inner side thereof increases toward the floor base 18, stiffness at the floor base 18 may be raised.

### = Supplementary Descriptions =

In the exemplary embodiments described above, the strainer portions 13 are provided at upper portions of the wheel house portions 12, but the present disclosure is not limited thus. The strainer portions 13 need not be provided, in which case the ribs 30, 50 or 60 extend to upper end portions of the wheel house portions 12. Instead of the strainer portions 13, bracket portions (not shown in the drawings) may be provided at the upper portions of the wheel house portions 12, in which case the ribs 30, 50 or 60 extend to upper end portions of the bracket portions.

The vehicle rear portion framework structure 10 according to the first exemplary embodiment described above is provided with four of the ribs 30 at each wheel house portion 12, but the present disclosure is not limited thus. The vehicle rear portion framework structure 10 may be provided only with the two first ribs 30A, may be provided only with the two second ribs 30B, and may be provided with three ribs 30 including the first rib 30A and the second rib 30B. Furthermore, the vehicle rear portion framework structure 10 may be provided with one of the ribs 30, or with five or more. The same applies to the ribs 50 according to the variant example.

The vehicle rear portion framework structure according to the present disclosure may be provided with both the ribs 30 of the vehicle rear portion framework structure 10 according to the first exemplary embodiment and the ribs 50 according to the variant example.

Structures of the present disclosure are not limited by the exemplary embodiments described above; the structures may be suitably modified as long as the problem of the present disclosure may be solved.

### = Additional Remarks =

The additional notes below are disclosed in relation to the exemplary embodiment described above.

A vehicle rear portion framework structure is integrally molded by casting, the vehicle rear portion framework structure including:
a left and right pair of wheel house portions;
a floor portion provided between the left and right pair of wheel house portions, a floor pan being formed at the floor portion, the floor pan forming a floor surface of the vehicle cabin; and
a rib that projects from a vehicle width direction inner side of each of the wheel house portions, the each rib extending from the floor portion to an upper end portion of the wheel house portion and extending toward the vehicle rear side relative to the floor pan.

## Claims

1. A vehicle rear portion framework structure (10) that is integrally molded by casting, the vehicle rear portion framework structure (10) comprising:
a left and right pair of wheel house portions (12);
a floor portion (14) provided between the left and right pair of wheel house portions (12), an aperture portion (20) being formed in the floor portion (14); and
a rib (30, 50) that projects from a vehicle width direction inner side of each of the wheel house portions (12), the rib (30, 50) extending from the floor portion (14) to an upper end portion of the wheel house portions (12), a base portion of the rib (30, 50) being in contact with the floor portion (14), and a vehicle width direction inner side end portion of the base portion extending to a position that is closer to an aperture edge of the aperture portion (20) than to the wheel house portions (12) in plan view.

2. The vehicle rear portion framework structure (10) according to claim 1, wherein the vehicle width direction inner side end portion of the base portion of the rib (30, 50) extends to the aperture edge in plan view.

3. The vehicle rear portion framework structure (10) according to claim 1 or 2, wherein the aperture portion (20) is formed by the casting.

4. The vehicle rear portion framework structure (10) according to any of claims 1 to 3, wherein the rib (30, 50) extends from a substantially central portion in a vehicle front-and-rear direction of the aperture portion (20) in plan view.

5. The vehicle rear portion framework structure (10) according to any of claims 1 to 4, wherein:
each of the left and right pair of wheel house portions (12) is provided with a strainer portion (13) at an upper portion of the wheel house portion (12), and
an upper end portion of the rib (30, 50) extends to the strainer portion (13).

6. The vehicle rear portion framework structure (10) according to any of claims 1 to 5, wherein a plurality of the ribs (30, 50) are provided.

7. The vehicle rear portion framework structure (10) according to any of claims 1 to 6, wherein a projection amount of the rib (30, 50) toward the vehicle width direction inner side increases on progression toward the floor portion (14).
